# EUROPÄISCHE PATENTSCHRIFT

(11) **EP 2 249 941 B1**
(45) Veröffentlichungstag und Bekanntmachung des Hinweises auf die Patenterteilung: **20.11.2013**
(21) Anmeldenummer: 08873163.3
(22) Anmeldetag: 18.12.2008
(51) Int. Cl.: B01D 35/027, B01D 19/00, B01D 29/23, B01D 35/147

(54) **FILTERVORRICHTUNG SOWIE FILTERELEMENT FÜR EINE SOLCHE FILTERVORRICHTUNG**
FILTER APPARATUS AND FILTER ELEMENT FOR SUCH A FILTER APPARATUS
DISPOSITIF DE FILTRATION ET ÉLÉMENT FILTRANT DESTINÉ À UN TEL DISPOSITIF DE FILTRATION

(30) Priorität: 04.03.2008 DE 102008012521
(43) Veröffentlichungstag der Anmeldung: 17.11.2010
(60) Teilanmeldung: 13004742.6
(73) Patentinhaber: RT-Filtertechnik Gmbh, 88048 Friedrichshafen (DE)
(72) Erfinder: STEHLE, Gerhard, 78467 Konstanz (DE); WOZNIAK, Sven, 78467 Konstanz (DE); MÜLLER, Günther, 88682 Salem (DE)
(74) Vertreter: Bartels, Martin Erich Arthur
(86) Internationale Anmeldenummer: PCT/EP2008/010789
(87) Internationale Veröffentlichungsnummer: WO 2009/109212

(56) Entgegenhaltungen:
- EP-A- 0 355 785
- EP-A- 1 419 807
- DE-A1- 2 948 868
- DE-U1- 9 103 400
- GB-A- 2 263 874
- US-A- 4 397 745
- US-A- 4 401 563
- US-A1- 2007 006 735

## Beschreibung

Die Erfindung betrifft eine Filtervorrichtung, insbesondere vorgesehen zum Einbau In einen Fluid-Vorratstank, mit mindestens einem vorzugsweise austauschbaren Filterelement, das von innen nach außen von einem Fluid durchströmbar ist und das jeweils unter Beibehalten eines vorgebbaren Radialabstandes und unter Bildung eines Fluidströmungsraumes von einer Gehäusewand umgeben ist, die mehrere Durchlassstellen aufweist, von denen ein Teil unterhalb des jeweiligen veränderbaren Fluidniveaus im Vorratstank und der andere Teil oberhalb dieses Fluidniveaus angeordnet ist. Dahingehende Lösungen werden fachsprachlich auch mit Intank-Lösung bezeichnet.

Durch die EP 1 419 807 B1 ist eine Intank-Filtervorrichtung bekannt, mit einem auswechselbaren Filterelement, das in einen Vorratstank für Flüssigkeiten, insbesondere in Form von Hydraulikflüssigkeit, aufnehmbar ist und eine Schmutzseite von einer Reinseite des Tanks trennt. Ferner ist die bekannte Lösung mit einer das Filterelement abnehmbar haltenden Aufnahme versehen, die einen zur Reinseite des Tanks führenden Durchgang für gefiltertes Fluid aufweist, wobei ein Rückhalteelement vorgesehen ist, das einen möglichen Durchtritt von Fremdkörpern durch die Öffnung des Durchganges zur Reinseite des Behältnisses verhindert. Als Rückhalteelement dient bei der bekannten Lösung ein Kegel, dessen Mantel fläche durchbrochen ist, so dass beim Auswechseln des Filterelementes ein möglicher Durchtritt von Fremdkörpern auf die Tank-Reinseite verhindert ist und dennoch im Element befindliches Fluid ablaufen kann, sofern dieses gegen ein Neuelement getauscht wird. Das jeweils eingesetzte Filterelement weist eine plissierte Filtermatte auf, die hinter der jeweils vorgesehenen Durchströmungsrichtung von einem Stützrohrmantel abgestützt ist.

Eine vergleichbare intank-Lösung ist auch in der DE 10 2004 014 149 B4 aufgezeigt, wobei auch die dahingehend bekannte Filtervorrichtung mindestens ein Filterelement mit plissierter Filtermatte aufweist, das in einem Filtergehäuse aufnehmbar ist, das über Fluidanschlüsse mit einer Fluideinrichtung, insbesondere in Form eines Hydraulik-Vorratstanks, mittels einer Anschlußeinrichtung fluidführend verbindbar und an der Fluideinrichtung mittels einer Befestigungseinrichtung lösbar anbri ngbar ist. Als Befestigungseinrichtung ist ein durch Verdrehen des Filtergehäuses verriegelbarer und lösbarer Bajonettverschluß vorgesehen, wobei die Anschlußeinrichtung mit mindestens einem bewegbaren Sperrteil versehen ist in der Art eines drehbar gelagerten Drehschiebers, das in einer Sperrstellung den ihm jeweils zuordenbaren Fluidanschluß sperrt und nach Bewegen in eine Öffnungsstellung für den Fluiddurchtritt diesen freigibt.

Bei der Filtration mit dahingehenden Intank-Filtervorrichtungen kommt es grundsätzlich, insbesondere bei hohen Arbeitsdrücken und/oder großen Fluidmengen, beim Durchtritt des abzureinigenden Fluids durch das jeweilige Filterelement zum Spritzen und zur Schaumbildung, letzteres bedingt durch Gasblasen, insbesondere gebildet aus Luh, die regelmäßig im vorangehenden hydraulischen Arbeitskreis in das Fluid, insbesondere in Form von Hydrauliköl, gelangen können, was insbesondere der Fall ist, wenn dahingehende Filtervorrichtungen für mobile Maschinen zum Einsatz kommen, wie beispielsweise Bagger, Rad- oder Teleskoplader etc., die umfänglich mit einer Arbeitshydraulik versehen sind, beispielsweise in Form von mittels Pumpen ansteuerbarer und versorgbarer Hydraulikzylinder. Um zu vermeiden, dass bei den bekannten Lösungen das aus dem Filterelement herausspritzende und schaumbildende Fluid in unmittelbaren Kontakt kommt mit der sonstigen Fluid- oder Ölmenge im Vorratstank, sind die Filterelemente in entsprechenden Umfassungsgehäusen innerhalb des Tanks gekammert, die jeweils eine Art Vorberuhigungsraum oder Vorkammer bilden, in denen das abgereinigte Fluid zur Ruhe kommen kann und etwaige Gasblasen nach oben hin auftriebsbedingt austreten können. Die genannten Beruhigungskammern nehmen aber innerhalb des eigentlichen Tankvolumens relativ viel Bauraum ein und führen letztendlich somit auch zu groß aufbauenden Vorratstanks als Ganzes und insbesondere bei hohen Arbeitsdrücken und/oder sehr großen Mengen an zu filtrierendem Fluid genügen die Vorkammervolumen regelmäßig nicht, in ausreichendem Maße eine Beruhigung des Öls vor Abgabe in den eigentlichen Vorratstank zu bewerkstelligen.

Eine Filtervorrichtung der eingangs genannten Art ist aus DE 29 48 868 A1 bekannt. Die bekannte Filtervorrichtung weist einen Flüssigkeitsbehälter, der mindestens teilweise bis zu einem vorgegebenen Spiegel mit der Flüssigkeit befüllt ist, ein längliches Gehäuse mit mindestens teilweise offenem Oberteil und Unterteil, welches so im Behälter angeordnet ist, dass das einen Flüssigkeitseinlass aufweisende Gehäuseunterteil in der Flüssigkeit befindlich ist, ein Filtersystem mit einem an beiden Seiten offenen rohrförmigen Filterelement und eine Halteranordnung auf, die lösbar mit einem axialen Ende des Filterelements verbunden ist. Das andere Ende des Filterelements ist durch die obere Gehäuseöffnung und über einen inneren Gehäuseteil so in das Gehäuse einschiebbar, dass sich das innere Gehäuseteil vollständig axial durch das Filterelement erstreckt, wobei das Filterelement im radialen Abstand zum inneren Gehäuseteil unter Bildung einer ringförmigen Einlasskammer angeordnet ist. Ferner sind Dichtmittel zur Abdichtung beider axialer Enden des Filterelements gegen die entsprechenden Gehäuseteile, Durchlasskanäle im Gehäuse, die den Gehäuseeinlass mit der inneren Einlassringkammer verbinden und an der Halteranordnung befestigte Ablenkmittel vorgesehen, die den Flüssigkeitsfluss durch das Filterelement in Richtung auf den teilweise offenen Gehäuseunterteil ablenken, der sich unterhalb des Flüssigkeitsspiegels befindet. Die Flüssigkeitsdurchlässe können sich unterhalb des Flüssigkeitsspiegels im Behälter befinden. Weiter kann das äußere Führungsrohr des Gehäuses perforiert sein.

Ausgehend von diesem Stand der Technik liegt der Erfindung die Aufgabe zugrunde, die bekannten Lösungen dahingehend weiter zu verbessern, dass sie uneingeschränkt auch für mobile Anwendungen zum Einsatz kommen können und dass unter Beibehalten der Vorteile einer sehr guten Abreinigung des Fluids eine bauraumsparende und kostengünstige Lösung zur Verfügung gestellt ist, mit der auch bei hohen Drücken und/oder sehr großen Mengen von Fluid die problemlose Weitergabe an einen Vorratstank beherrschbar ist.

Eine dahingehende Aufgabe löst eine Filtervorrichtung mit den Merkmalen des Patentanspruches 1 in seiner Gesamtheit.

Gemäß dem kennzeichnenden Teil des Patentanspruchs 1 zeichnet sich eine erfindungsgemäße Filtervorrichtung dadurch aus, dass die jeweiligen Durchlassstellen Teil mindestens einer Sieb-oder Gitterstrukturlage sind, die in der Gehäusewand angeordnete, bevorzugt fensterartige Durchlassöffnungen abdeckt, und dass die freien Öffnungsquerschnitte für die Durchlassstellen der mindestens einen Strukturlage derart gewählt sind, dass etwaig im gereinigten Fluid sich befindende Gasblasen an der derart perforierten Strukturlage abscheidbar und/oder für eine fluidniveaunahe Abgabe sammelbar sind. Vorzugsweise sind die freien Öffnungsquerschnitte für die Durchlassstellen derart gewählt, dass die Gasblasen für eine erleichterte Abgabe unter dem Einfluss ihrer Oberflächenspannung im Volumen vergrößerbar sind.

Dank der Anordnung von Durchlassstellen strömt das in den Fluidströmungsraum eintretende, vom jeweiligen Filterelement gereinigte Fluid im Bereich des jeweiligen Fluidniveaus und oberhalb desselben in laminarer Weise über die zuordenbaren Durchlassstellen in den Vorratstank und die unerwünschte Spritz- oder Schaumbildung beim austretenden Fluid ist derart mit Sicherheit vermieden. Aufgrund der Druckdifferenz zwischen dem einströmendem, nicht gereinigten Fluid und dem abströmendem, gereinigten Fluid kann letzteres im Fluidströmungsraum über das Fluidniveau im Tank angehoben werden bei gleichmäßiger Verteilung entlang der Innenseite der Gehäusewand mit den Durchlassstellen, wozu auch Kapillareffekte mit beitragen können, und der derart entstehende gleichmäßige Fluidfilm ermöglicht dann den spritz- und schaumfreien Austritt aus den genannten Durchlassstellen quer zu der Gehäusewand.

Sofern das im Fluidströmungsraum befindliche gereinigte Fluid etwaige Gasblasen, wie Luftblasen, aufweist, werden diese an die jeweilige Durchlassstelle mit abgegeben, die für eine fluidniveaunahe Abgabe innerhalb des Vorratstanks die Blasen sammelt und vorzugsweise für eine erleichterte Abgabe in ihrem Volumen vergrößert. Dergestalt erhalten die Gasblasen einen höheren Auftrieb und separieren sich leichter von der austretenden, gereinigten Fluidmenge, insbesondere derart, dass kein Schaum und keine Spritzbildung entsteht, die ansonsten wiederum die Einbindung von Gas oder Luft in die austretende Fluidmenge begünstigen würden. Sofern die Fluidmenge innerhalb des Vorratstanks im wesentlichen entgast ist, kann bei einer entsprechenden Fluidentnahme und Weitergabe an die Arbeitshydraulik es zu keinen Gasblasen bedingten Ausfällen kommen und Schädigungen der Arbeitshydraulik im Betrieb sind mit Sicherheit vermieden.

Durch das homogene Austrittsverhalten werden auch gegebenenfalls noch im Tank befindliche Schwebstoffteile nicht aufgewirbelt und auf aufwendige Vorruhekammern im Tank, die im übrigen auch Bauraum einnehmen, kann vollständig verzichtet werden.

Sollte das Fluidniveau und mithin der Ölspiegel unter die untersten Durchlassstellen absinken, was beispielsweise beim Abschalten der Arbeitshydraulik der Maschine der Fall sein könnte, ist nicht auszuschließen, dass sich dort ein Luftpolster sammelt, das wie bereits dargelegt, gerade nicht erwünscht ist. Um dieser Gefahr zu begegnen, ist bei einer besonders bevorzugten Ausführungsform der erfindungsgemäßen Filtervorrichtung vorgesehen, dass die Gehäusewand zu ihrer Unterseite hin geschlossen ausgebildet ist und dass in den Fluidströmungsraum eine zusätzliche Hülle eingesetzt ist, die unterhalb des anzunehmenden tiefsten Fluidniveaus weitere Durchlassstellen aufweist und bis dahin und oberhalb dieses Niveaus ansonsten eine geschlossene Hüllenfläche ausbildet.

Alternativ kann auch vorgesehen sein, um diesem Effekt zu begegnen, dass das jeweils eingesetzte Filterelement mit seiner äußeren Hülle, die eine Art Stützrohr, insbesondere Stützzylinder, bildet bis unter den minimal zu erwartenden Ölspiegel (Fluidniveau) im Tank einen ungelochten, geschlossenen Hüllenteil aufweist und darunter befinden sich dann zur Vermeidung des genannten Luftpolsters entsprechend die weiteren Durchlassstellen, vorzugsweise in der Art einer Perforation in der genannten Stützrohrhülle. Insoweit besteht also die Möglichkeit die Hülle als eigenständiges Zusatzteil in den Fluidströmungsraum einzubringen oder das äußere Stützrohr des Filterelementes so zu modifizieren, dass die beschriebene Hüllenfunktion erreicht ist.

Weitere vorteilhafte Ausführungsform der erfindungsgemäßen Filtervorrichtung sind Gegenstand der sonstigen Unteransprüche.

Im Folgenden wird die erfindungsgemäße Lösung anhand verschiedener Ausführungsbeispiele nach der Zeichnung näher erläutert. Dabei zeigen in prinzipieller und nicht maßstäblicher Weise die
- Fig. 1: einen Längsschnitt durch ein erstes Ausführungsbeispiel der erfindungsgemäßen Filtervorrichtung;
- Fig. 1A: eine der Fig. 1 entsprechende Darstellung, jedoch in einer anderen Schnittebene gezeichnet;
- Fig. 2: eine perspektivische Außenansicht der Filtervorrichtung nach der Fig. 1 und
- Fig. 3: teilweise aufgeschnitten dargestellt ein zweites Ausführungsbeispiel der Filtervorrichtung;
- Fig. 4 und 5: ein drittes Ausführungsbeispiel der Filtervorrichtung, einmal im Längsschnitt dargestellt, einmal in der Seitenansicht, wobei das untere Fußteil gleichfalls geschnitten dargestellt ist.

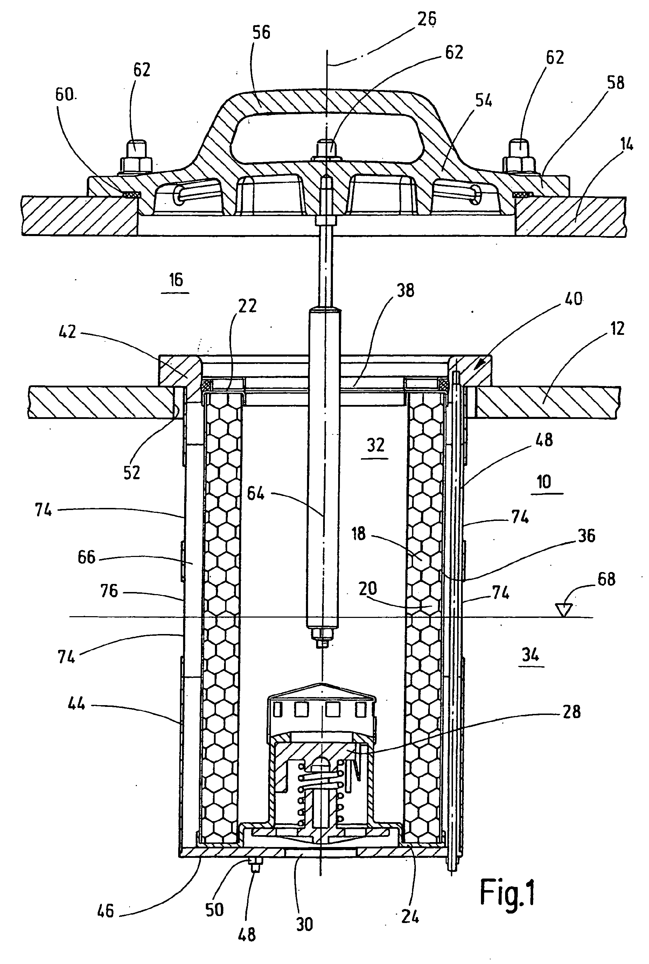

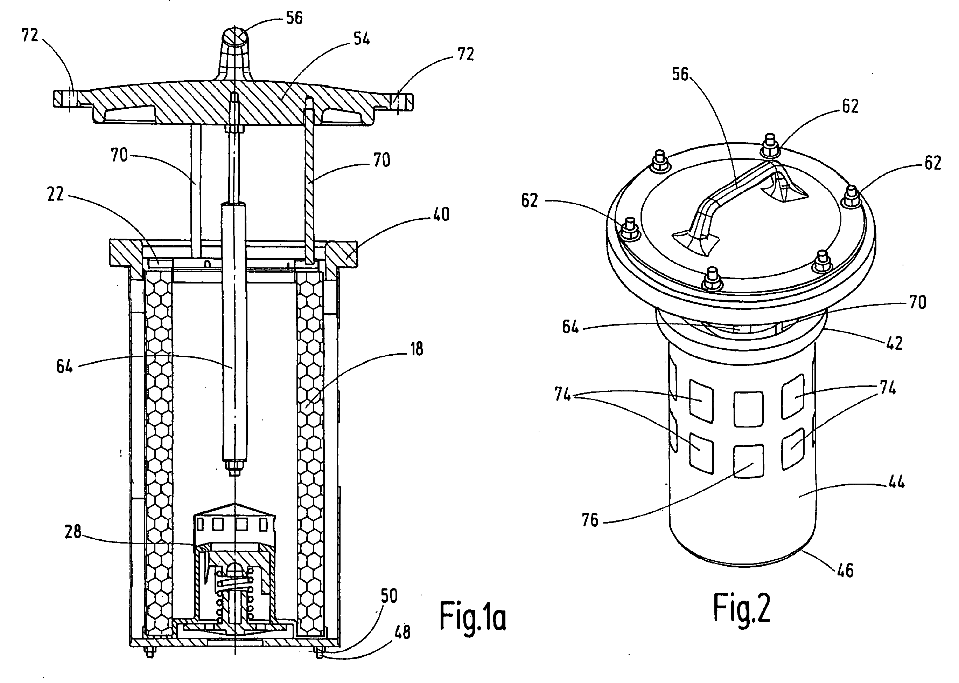

Die in der Fig. 1 gezeigte Filtervorrichtung dient dem Einbau in einen behälterartigen Fluidvorratstank 10, vergleichbar zu der Einbausituation nach der EP 1 419 807 B1. Von dem Fluidvorratstank 10 ist gemäß Darstellung nach der Fig. 1 nur die obere Tankwand 12 gezeichnet, sowie eine zugehörige Aufnahmewand 14 zum Festlegen der Filtervorrichtung. Zwischen diesen Wandabschnitten 12,14 verläuft ein Einlaufkanal 16 für verschmutztes Fluid, wie es beispielsweise aus dem Hydraulikkreis einer nicht näher dargestellten Arbeitshydraulik einer Baumaschine oder dergleichen stammt.

Die Filtervorrichtung weist des weiteren ein Filterelement 18 auf mit vorzugsweise plissierter Filtermatte 20. Ansonsten bildet das Filterelement 18 im wesentlichen eine Art Kreiszylinder aus. Die Filtermatte 20 ist zwischen einer oberen Endkappe 22 und einer unteren Endkappe 24 als Teile des Filterelementes 18 geführt. Die untere Endkappe 24 weist mittig und koaxial zur Längsachse 26 der Filtervorrichtung verlaufend ein an sich übliches Bypassventil 28 auf, das bei von Verschmutzungen zugesetzter Filtermatte 20 öffnet und unter Umgehung der Filtermatte 20 das Fluid ungereinigt über eine untere Bypassöffnung 30 in den Vorratstank 10 abströmen läßt. Da die Filtermatte 20 von innen nach außen durchströmt wird, also die Durchströmung von der Innenseite 32 des Filterelementes 18 in Richtung des Inneren 34 des Fluidvorratstanks erfolgt, ist die Filtermatte 20 zur Aussteifung nach außen hin von einem Stützrohr oder Stützmantel 36 umfaßt, wobei das Stützrohr 36 vorzugsweise kreiszylindrisch ausgebildet ist und entsprechende, nicht näher dargestellte Durchlassöffnungen aufweist für den Durchtritt des mittels der Filtermatte 20 abgereinigten Fluids. Ein entsprechend geformter Stützmantel (nicht dargestellt) könnte aber auch der Außenkontur der plissierten Filtermatte nachfolgen und insofern zur Erhöhung der Druckstabilität des Elementes nach außen die Abstützung vornehmen. Auch der dahingehende Stützmantel verfügt über entsprechende Durchlassöffnungen für das Fluidmedium. Der Fluideintritt des ungereinigten Fluids, vom Einlaufkanal 16 kommend, erfolgt über die obere Eintrittsöffnung 38 des Filterelementes in Richtung der genannten Innenseite 32 desselben.

Das Filterelement 18 ist in einem als Ganzes mit 40 bezeichneten Gehäuse aufgenommen, das an seiner Oberseite eine flanschartige Verbreiterung 42 aufweist, mit der sich die Filtervorrichtung in diesem Bereich an der Oberseite der oberen Tankwand 12 abstützt. An die genannte Verbreiterung 42 schließt sich nach unten hin eine zylindrische Gehäusewand 44 an, die zu ihrer Unterseite 46 hin geschlossen ausgebildet ist, bis auf die genannte Bypassöffnung 30. Vorzugsweise bildet die dahingehende Unterseite 46 der Gehäusewand 44 ein eigenständiges Bodenteil aus und die Gehäusewand 44 stützt sich mit ihrem jeweils freien Ende an einer absatzartigen Stufe des Bodenteils 46 ab sowie an der flanschartigen Verbreiterung 42. Damit der beschriebene Verbund des Gehäuses 40 in der in der Fig. 1 gezeigten Zusammenbaulage verbleibt, sind außenumfangsseitig zur Filtermatte 20 mit Stützrohr 36 Haltestäbe 48 angeordnet, von denen in der Fig. 1 nur ein Haltestab 48 ganz gezeigt ist und von den beiden anderen dahingehend eingesetzten Haltestäben 48 ist in der Fig. 1 nur ein weiterer Stab 48 der Einfachheit halber mit seinem unteren Abschlußende gezeigt, das insoweit unter die Unterseite des Bodenteils 46 hervorragt. In diesem Bereich ist der jeweilige Haltestab 48 über eine Gewindemutter 50 verschraubt und das obere Ende des jeweiligen Haltestabes 48 ist über ein entsprechendes Innengewinde in die flanschartige Verbreiterung 42 eingedreht. Dergestalt kann unter einer vorgegebenen Vorspannung die Gehäusewand 44 zwischen Verbreiterung 42 und Bodenteil 46 festgelegt werden.

Damit das Gehäuse 40 in die obere Tankwand 12 einsetzbar ist, ist in diese eine entsprechende kreiszylindrische Ausnehmung 52 eingebracht, deren Durchmesser jedenfalls größer ist als der Außendurchmesser im Bereich des Überganges zwischen der flanschartigen Verbreiterung 42 und dem Außenumfang der Gehäusewand 44. Ferner ist ein Deckelteil 54 als Teil der Filtervorrichtung vorhanden mit einem Handgriff 56 für den erleichterten Ein- und Ausbau der Filtervorrichtung in den gezeigten Tank 10. Das Deckelteil 54 weist eine absatzartige Verbreiterung 58 auf, die auf der Oberseite der Aufnahmewand 14 aufsteht und ein Absatz der Verbreiterung 58 greift in den freien Innendurchmesser der Aufnahmewand 14 unter Anlage an dieselbe ein. Zur Fluidabdichtung dient in diesem Bereich ein ringförmiges Dichtelement 60 üblicher Bauart. Wie insbesondere die Fig. 2 zeigt, sind diametral zur Längsachse 26 der Vorrichtung einander gegenüberliegend Festlegeschrauben 62 vorhanden, die dem Festlegen des Deckelteils 54 an der Aufnahmewand 14 dienen. Nach Lösen der Schrauben 62 läßt sich die Filtervorrichtung aus dem Tank 10 ausbauen und in umgekehrter Montageabfolge wieder einbauen. Die dahingehenden Montagevorgänge sind notwendig, sofern ein verbrauchtes Filterelement 18 gegen ein Neuelement zu tauschen ist.

Konzentrisch zur Längsachse 26 verläuft ein Magnetstab 64, der insbesondere die Funktion eines Permanentmagneten hat und der in Blickrichtung auf die Fig. 1 gesehen mit seinem oberen Ende im Deckelteil 54 festgelegt, insbesondere dort eingeschraubt ist und mit seinem anderen gegenüberliegenden freien Ende durchgreift er die Innenseite 32 des Filterelementes 18. Der dahingehende Magnetstab 64 erlaubt eine Abscheidung von magnetisierbaren Metallbestandteilen im zu filternden Fluid. Sowohl Magnetstab 64 als auch Bypassventil 28 sind optional und für die Funktion der Filtervorrichtung als Ganzes nicht zwingend vorzusehen.

Wie die Fig. 1 des Weiteren zeigt, nimmt die zylindrische Gehäusewand 44 einen vorgebbaren Radialabstand zu der Außenumfangsfläche des Filterelementes 18 ein, so dass insoweit ein Fluidströmungsraum 66 gebildet ist. Der dahingehende Fluidströmungsraum 66 erstreckt sich parallel zur Außenumfangsfläche des Filterelementes 18, insbesondere erstreckt er sich in axialer Längsrichtung parallel zur Längsachse 26 der Vorrichtung zwischen der Oberseite des Bodenteils 46 und der Unterseite der flanschartigen Verbreiterung 42. Ferner ist der Fluiströmungsraum 66 nach außen hin im Wesentlichen von der Gehäusewand 44 begrenzt und nach innen hin von der Außenumfangsfläche der Filtermatte 20. Sofern ein Stützmantel oder ein Stützrohr 36 für die Filtermatte 20 zum Einsatz kommt, bildet die dahingehende Außenumfangsfläche die Begrenzung für die Fluidströmungsraum 66.

Bei dem Ausführungsbeispiel nach der Fig. 1 ist ein Fluidniveau 68 innerhalb des Vorratstanks 10 eingezeichnet und das Filterelement 18 und mithin der Fluidströmungsraum 66 liegen teilweise unter dem Niveau 68 und teilweise oberhalb desselben. In Abhängigkeit von der zuströmenden Fluidmenge über den Einlaufkanal 16 oder die abströmende für die Arbeitshydraulik benötigte Menge ändert sich das Fluidniveau 68 gegenüber der gezeigten Momentanposition in der Fig. 1. Der Fluidströmungsraum 66 ist im übrigen von seinem Strömungsraum her bis auf den Durchgriff der einzelnen Haltestäbe 48 (vgl. Fig. 1) nicht beeinträchtigt.

Wie die Fig. 1a zeigt, die eine andere Längsschnittebene betrifft als die Fig. 1, aber ansonsten sich auf die im Wesentliche gleiche Filtervorrichtung beziehen soll, weist die Filtervorrichtung einzelne Verbindungsstäbe 70 auf, die der einfacheren Darstellung wegen in der Fig. 1 weggelassen wurden und von den insgesamt drei Verbindungsstäben 70 sind in der Fig. 1a nur zwei dargestellt. Die verbindungsstäbe 70 sind endseitig mit dem Deckelteil 54 verbunden und liegen ansonsten an der oberen Endkappe 22 des Filterelementes 18 an, um dieses in der gezeigten Einbaulage zu halten. Insoweit besteht die Möglichkeit, durch Entfernen des Deckelteils 54 nur das auszutauschende Filterelement 18 aus dem Gehäuse 40 zu entfernen, das ansonsten in seiner Einbaulage an der oberen Tankwand 12 verbleibt. Andere Lösungsansätze sind hier möglich, beispielsweise in dem Sinne, dass bei fester Verbindung der Stege 70 mit dem Gehäuse 40 selbst dieses zusammen mit dem Filterelement 18 über das Deckelteil 54 bei Bedarf entnehmbar ist. In der Fig. 1a wurde der einfacheren Darstellung wegen gegenüber der Fig. 1 die Wände 12, 14 ebensowenig dargestellt wie die Festlegeschrauben 62, die die entsprechende Ausnehmungen 72 im Deckelteil 54 durchgreifen. Wie die Ausrichtung des Handgriffes 56 zeigt, ist die Darstellung nach der Fig. 1a um 90° aus der Zeichenebene gemäß der Darstellung nach der Fig. 1 herausgeschwenkt dargestellt.

Wie des Weiteren die Fig. 2 zeigt, die eine Außenansicht der Filtervorrichtung nach der Fig. 1 betrifft, sind in der Gehäusewand 44 fensterartige Durchlassöffnungen 74 vorhanden, die ringartig übereinander liegende und umfangsseitig umlaufende Gruppen ausbilden, wobei die beiden benachbarten Gruppen einen gleichen Axialabstand zueinander aufweisen und die einzelnen Durchlassöffnungen 74 innerhalb einer Gruppe weisen in radialer Richtung ebenfalls gleiche Abstandsmaße zueinander auf. Wie die Darstellung nach der Fig. 1 weiter zeigt, ist bei gegebenem Fluidniveau 68 die untere Gruppe an Durchlassöffnungen 74 vom Fluidniveau noch abgedeckt und die darüberliegende Gruppe an Durchlassöffnungen 74 endet an der Niveauoberseite ins Innere des Tanks 10 aus. Im vorliegenden Ausführungsbeispiel ist innerhalb der Gehäusewand 44 und an deren Innenseite anliegend eine Sieb- oder Gitterstrukturlage 76 angeordnet, die einen durchgehenden Zylindermantel bildet und alle gleich ausgebildeten fensterartigen Durthlassöffnungen 74 randseitig übergreift. Damit die Strukturlage 76 an der Innenseite der Gehäusewand 44 verbleibt, kann diese über eine nicht näher dargestellte Punktschweißung entsprechend festgelegt sein.

Anstelle einer einzigen Strukturlage 76 kann dem Grunde nach aber auch für jede Fensteröffnung 74 ein eigenständiges Gitter vorgesehen sein, das von der Innenseite her mit einem randseitigen Überstand die dahingehende Fensteröffnung dann abdeckt. Als Strukturlage 76 kann ein Streckmetallgitter dienen, aber auch ein sonstiges dünnmaschiges Gitter oder Netzwerk auch in Form einer Gewebestruktur mit Kett- und Schußfäden. Vorzugsweise weist die jeweils eingesetzte Strukturlage 76 für die Vielzahl an Durchlassstellen pro Durchlassstelle einen Öffnungsquerschnitt von weniger als einem Millimeter auf. Die Wahl der freien Öffnungsquerschnitte für die Durchlassstellen der Strukturlage hängt von Umgebungsbedingungen ab, wie der Viskosität des eingesetzten Fluids, insbesondere in Form des Hydrauliköls, die letztendlich auch mit von Umgebungstemperaturwerten abhängig ist Die Fensteröffnungen 74 sind vorzugsweise in Rechteckform realisiert; andere Öffnungsgeometrien wären aber insoweit gleichfalls möglich.

Nimmt man nun die Filtervorrichtung nach den Fig. 1, 1A und 2 in Betrieb, durchströmt Fluid die Filtermatte 20 von innen nach außen und wird dabei abgereinigt. Da ein Teil des im Tank 10 bevorrateten Fluids, das unterhalb des Niveaus 68 sich befindet, in die unteren Durchlassöffnungen 74 einströmt, füllt sich insoweit der unterhalb des Niveaus 68 befindliche Einströmungsraum 66 mit Fluid mit der Folge, dass weiter von der Innenseite 32 her nachströmendes Fluid nach oben hin verdrängt wird, so dass eine filmartige Hohlsäule im Fluidströmungsraum 66 an Fluid entsteht, dass sich an der Innenseite der Gehäusewand 44 anlegt, sowie an den Durchlassstellen der insoweit perforierten Sieb-oder Gitterstrukturlage 76. Die dahingehend hochsteigende Fluidanordnung oberhalb des Fluidniveaus 68 tritt durch die Durchlassstellen in den fensterartigen Durchlasssöffnungen 74 aus, was weitgehend laminar erfolgt und Spritz- oder Aufschäumvorgänge während des Durchtritts sind insoweit mit Sicherheit vermieden. In Abhängigkeit der Fluidmengen und des Fluiddruckes, wie sie sich über den Fluidzulauf im Einlaufkanal 16 ergeben, kann der dahingehend laminare Fluidaustritt im Bereich des Fluidniveaus 68 stattfinden oder entsprechend darüberliegend. In Abhängigkeit der Volumengröße für den Fluidströmungsraum 66 kann bei entsprechend enger Radialauslegung, also bei geringem radialen Abstandsmaß, zur Außenseite des Filterelements 18 für die Aufwärtsbewegung sich ein unterstützender Kapillareffekt mit einstellen.

In Abhängigkeit der Maschenweite für die Strukturlage 76 lassen sich die freien Öffnungsquerschnitte für die Durchlassstellen derart wählen, dass etwaig im gereinigten Fluid sich befindende Gasblasen, wie Luftblasen, an der derart perforierten Strukturlage 76 sich abscheiden, wobei für eine fluidniveaunahe Abgabe des Gases die Blasen an der Strukturlage 76 gesammelt und für eine erleichterte Abgabe unter dem Einfluss ihrer Oberflächenspannung im Volumen vergrößert werden, so dass diese ohne weiteres vergleichbar den CO₂-Perlen bei einem kohlesäurehaltigen Getränk aus der Filtervorrichtung heraus nach oben hin aufsteigen können, so dass insoweit das Fluid im Tank wirksam entgast ist. Da hydraulische Arbeitseinrichtungen häufig empfindlich gegen Gaseintrag sind, ist insoweit der dahingehenden Störungsgefahr wirksam begegnet.

Anstelle der in den Fig. 1, 1A und 2 gezeigten, bis auf die fensterartigen Öffnungen 74, geschlossene zylindrische Umfangswand 44 des Vorrichtungsgehäuses kann diese auch ganz oder größtenteils von einer zylindrischen Strukturlage 76 mit entsprechenden Durchlassstellen (nicht dargestellt) ersetzt sein. Gegebenenfalls ist die Strukturlage 76 mehrlagig auszuführen, damit ein steiferer Aufbau für die Gehäusewand 44 zustande kommt, um die auftretenden Druckunterschiede im Tank 10 sicher beherrschen zu können. Anstelle der gezeigten Ausführungsform für die einzelnen Durchlassstellen jeweils den gleichen freien Öffnungsquerschnitt vorzusehen, wäre bei dem dahingehend geänderten Aufbau auch denkbar, in Richtung der ansteigenden Fluidströmung im Fluidströmungsraum 66 den freien Öffnungsquerschnitt zu ändern, insbesondere gleichförmig zunehmen zu lassen, um so einen verbesserten Fluidanstieg im Fluidströmungsraum 66 zu erreichen.

Die nachfolgenden Ausführungsbeispiele werden nur noch insoweit erläutert, als sie sich wesentlich von der vorangegangenen Ausführungsform unterscheiden, wobei für dieselben Bauteile mit derselben Funktion auch die bisher verwendeten Bezugszeichen eingesetzt sind und die insoweit getroffenen Ausführungen gelten auch für die geänderten Ausführungsformen.

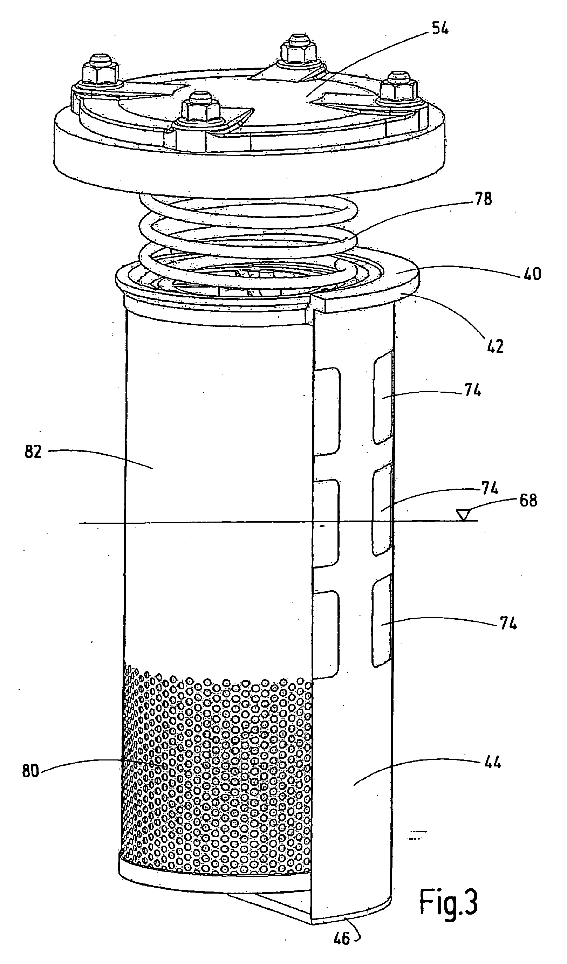

Bei dem Ausführungsbeispiel nach der Fig. 3 ist anstelle der Verbindungsstäbe 70 eine Druckfeder 78 vorgesehen, die sich zwischen Deckelteil 54 und Gehäuse 40 erstreckt um bei festgelegtem Deckelteil 54 das Gehäuse 40 der Filtervorrichtung gegen die Oberseite der oberen Tankwand 12 zu drücken. Anstelle der bisherigen zwei Gruppen an fensterartigen Durchlassöffnungen 74 weist die Lösung nach der Fig. 3 drei derart übereinander liegende Gruppen auf. Das Fluidstandsniveau ist wiederum mit einem Dreieck unter dem Bezugszeichen 68 beispielhaft angegeben. Wesentlich bei der geänderten Ausführungsform nach der Fig. 3 ist, dass unterhalb des niedrigst möglichen Fluidstandsniveaus 68 weitere Durchlassstellen 80 in der Art einer Perforation in eine zylindrische Hülle 82 eingebracht sind, wobei die dahingehende Hülle 82 mit ihren gesch lossenen Flächenbereichen jedenfalls unterhalb des zutiefst anzunehmenden Fluidniveaus 68 ausmündet und darunterliegend weitere Durchlassstellen 80 aufweist.

Die genannte Hülle 82 kann als eigenständiges Bauteil in den Fluidströmungsraum 66 eingebracht sein; es besteht aber auch die Möglichkeit, dass die gezeigte Hülle 82 insbesondere im Umfang der weiteren Durchlassstellen 80 Bestandteil des Filterelementes 18 ist und insoweit in der Art eines Stützrohres oder Stützmantels die Filtermatte 20 des Filterelementes 18 umgibt. Sollte der Ölspiegel in Form des Fluidniveaus 68 unter die dargestellten fensterartigen Durchlassöffnungen 74 fallen, könnte beim Abschalten der Arbeitshydraulik sich dort ungewollt ein Luftpolster sammeln. Dieses luftpolster tritt aber jedenfalls nicht auf, wenn gemäß der Darstellung nach der Fig. 3 der äußere Stützzylinder des Filterelementes 18 bis unter den minimal möglichen Ölspiegel einen ungelochten Teil aufweist, der gemäß der Darstellung nach der Fig. 3 auch durch eine separate Hülle 82, beispielsweise hergestellt aus Kunststoffmaterial, realisiert sein kann.

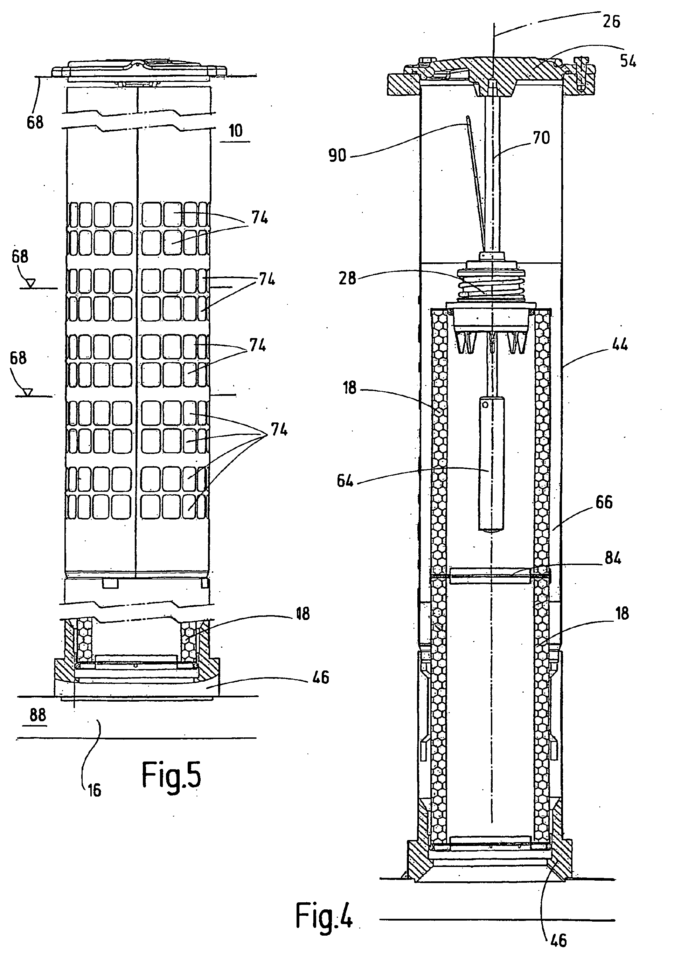

Bei der Ausführungsform nach den Figuren 4 und 5 sind in koaxialer Anordnung zur Längsachse 26 der Filtervorrichtung zwei Filterelemente 18 übereinander angeordnet, wobei das in Blickrichtung auf die Fig. 4 gesehen untere Filterelement 18 der Feinfiltration dient und das darüberliegende Element der Grobfiltration. Ist das Feinfiltrationselement 18 von Verschmutzungen zugesetzt, kann dann immer noch eine Grobfiltration über das obere Element 18 durchgeführt werden. Bei der vorliegenden Ausführungsform ist die Filtervorrichtung bis auf das nunmehr zuoberst angeordnete Bypassventil 28 geschlossen ausgeführt und das verschmutzte Fluid strömt nunmehr über einen Durchtritt an der Unterseite 46 in das jeweilige Filterelement 18 ein. Die beiden Filterelemente 18 sind in der Mitte über eine Abstandseinrichtung 84 voneinander separiert, die in der Mitte einen Fluiddurchgang aufweist. Je nach Verschmutzungsgrad für das untere Feinfilterelement 18 strömt dann zusehends ein Fluidanteil über den oberen Grobfilter 18. Ansonsten tritt vom unteren Filterelement 18 her gefiltertes Fluid in den bereits beschriebenen Fluidströmungsraum 66 ein.

Wie insbesondere die Fig. 5 zeigt, sind diesmal Zweiergruppen an fensterartigen Durchlassöffnungen 74 vorhanden, wobei fünf Zweier-Gruppen in Übereinanderanordnung vorgesehen sind. Ferner zeigt die Fig. 5 die beiden vorgesehenen unteren und oberen Fluidniveaus 68 (Ölstand min./Ölstand max.) an. Wie sich weiter aus der Fig. 5 ergibt, erstreckt sich diesmal die Filtervorrichtung zwischen einer Tankoberseite 68 und einer unteren Tankkammer 88, die insoweit den Einlaufkanal 16 für das verschmutzte Fluid bildet. Zur Befestigung der beiden übereinander angeordneten Filterelemente 18 mit ihren jeweiligen Endkappen an dem Deckelteil 54 dient diesmal ein einziger mittig angeordneter Verbindungsstab 70 und die Filteranordnung lässt sich mittels eines schwenkbaren Bügelgriffes 90 aus der Gehäusewand 44 ausbringen.

Mit der erfindungsgemäßen Filtervorrichtung nach den gezeigten Ausführungsbeispielen ist eine Aufnahme von Schmutzpartikeln im 10 µm-Bereich ohne Weiteres möglich. Verschmutzte Filterelemente 18 lassen sich einfachst tauschen und aufgrund der speziellen Gehäuseanordnung ist der Gefahr der Rückverschmutzung wirksam begegnet. Der jeweils eingesetzte Magnetstab 64 in der Art einer Magnetkerze lässt sich bei Wartungsarbeiten gut von außen einsehen und bei Bedarf von Hand mittels eines geeigneten Tuches abreinigen. Im Übrigen ist der Magnetstab 64 derart angeordnet, dass Fremdpartikel gleichmäßig an ihm anhaften, ohne dass es im Bereich des Bypassventils 28 zu einer Häufung an Verschmutzungen kommen könnte, was gegebenenfalls die Funktion des Ventils beeinträchtigen würde. Das Element ist insbesondere bei Fahrzeugbewegungen zwischen den Wandbereichen 12 und 14 gut abgestützt, so dass es nicht ungewollt zu einem Abheben von Filtervorrichtungsteilen kommt mit der Folge eines ungewollten Bypassstroms von ungefiltertem Fluid auf die Reinseite der Tank-Anordnung. Insgesamt ist mit der erfindungsgemäßen Filtervorrichtung ein modulares Konzept erreicht, was mit dazu beiträgt, die Herstellungskosten zu senken.

Besonders bedeutsam ist jedoch, dass mit der erfindungsgemäßen Lösung ein homogenes laminares Abströmen des gereinigten Fluids von der Filtervorrichtung zurück in einen Tank möglich ist, ohne dass es zu Spritzeffekten oder zur ungewollten Schaumbildung kommen kann. Aufgrund der eingesetzten Strukturlagen mit den feinmaschigen Durchlassöffnungen ist darüber hinaus das Entgasungsverhalten verbessert und ein schädigender Lufteintrag in das Hydraulikmedium ist mit Sicherheit ausgeschlossen.

## Patentansprüche

1. Filtervorrichtung, insbesondere vorgesehen zum Einbau in einen Fluid-Vorratstank (10), mit mindestens einem vorzugsweise austauschbaren Filterelement (18), das von innen nach außen von einem Fluid durchströmbar ist und das jeweils unter Beibehalten eines vorgebbaren Radialabstandes und unter Bildung eines Fluidströmungsraumes (66) von einer Gehäusewand (44) umgeben ist, die mehrere Durchlassstellen aufweist, von denen ein Teil unterhalb des jeweiligen veränderbaren Fluidniveaus (68) im Vorratstank (10) und der andere Teil oberhalb dieses Fluidniveaus (68) angeordnet ist, **dadurch gekennzeichnet, dass** die jeweiligen Durchlassstellen Teil mindestens einer Sieb- oder Gitterstrukturlage (76) sind, die in der Gehäusewand (44) angeordnete, bevorzugt fensterartige Durchlassöffnungen (74) abdeckt, und dass die freien Öffnungsquerschnitte für die Durchlassstellen der mindestens einen Strukturlage (76) derart gewählt sind, dass etwaig im gereinigten Fluid sich befindende Gasblasen an der derart perforierten Strukturlage (76) abscheidbar und/oder für eine fluidniveaunahe Abgabe sammelbar sind.

2. Filtervorrichtung nach Anspruch 1, **dadurch gekennzeichnet, dass** die Öffnungsquerschnitte für die Durchlassstellen derart gewählt sind, dass die Gasblasen für eine erleichterte Abgabe unter dem Einfluss ihrer Oberflächenspannung im Volumen vergrößerbar sind.

3. Filtervorrichtung nach Anspruch 1 oder 2, **dadurch gekennzeichnet, dass** die Durchlassstellen untereinander jeweils einen gleichen freien Öffnungsquerschnitt haben oder dass die freien Öffnungsquerschnitte in Richtung der ansteigenden Fluidströmung im Fluidströmungsraum (66) zumindest teilweise, vorzugsweise gleichförmig, zunehmen.

4. Filtervorrichtung nach einem der vorhergehenden Ansprüche, **dadurch gekennzeichnet, dass** die jeweilige Strukturlage (76) in Durchströmungsrichtung des Fluids durch die Durchlassöffnungen (74) in der Gehäusewand (44) vor derselben angeordnet sind und vorzugsweise im Fluidströmungsraum (66) angeordnet mit einer randseitigen Überdeckung die jeweils zuordenbaren fensterartigen Durchlassöffnungen (74) umfassen.

5. Filtervorrichtung nach einem der vorhergehenden Ansprüche, **dadurch gekennzeichnet, dass** die innerhalb der Gehäusewand (44) angeordneten Durchlassstellen in Gruppen angeordnet in radialer und/oder in axialer Erstreckungsrichtung einen gleichen Abstand voneinander aufweisen.

6. Filtervorrichtung nach einem der vorhergehenden Ansprüche, **dadurch gekennzeichnet, dass** von der Oberseite der Gehäusewand (44) sowie von einem Deckelteil (54) der Vorrichtung begrenzt ein Einlaufkanal (16) für verschmutztes Fluid gebildet ist oder dass über einen Durchgriff an der Bodenseite (46) der Gehäusewand (44) der Einlaufkanal (16) gebildet ist und die Gehäusewand (44) mit dem Deckelteil (54) verbunden einen geschlossenen Umfangsabschnitt bildet.

7. Filtervorrichtung nach einem der vorhergehenden Ansprüche, **dadurch gekennzeichnet, dass** die Gehäusewand (44) zu ihrer Unterseite (46) hin geschlossen ausgebildet ist und dass in den Fluidströmungsraum (66) eine zusätzliche Hülle (82) eingesetzt ist, die unterhalb des anzunehmenden tiefsten Fluidniveaus (68) weitere Durchlassstellen (80) aufweist und bis dahin und oberhalb dieses Niveaus (68) eine geschlossene Hüllenfläche ausbildet.

## Claims

1. A filter apparatus, in particular intended for installation in a fluid reservoir tank (10), comprising at least one preferably exchangeable filter element (18) through which fluid can flow from the inside to the outside and which is surrounded, in each case maintaining a presettable radial distance and with formation of a fluid flow space (66), by a housing wall (44) which has a plurality of passage points, some of which are arranged below the respective variable fluid level (68) in the reservoir tank (10), and the rest of which are arranged above this fluid level (68), **characterised in that** the respective passage points are part of at least one screen or lattice structure layer (76) which covers preferably window-like passage openings (74) arranged in the housing wall (44), and that the clear opening cross-sections for the passage points of the at least one structure layer (76) are chosen such that any gas bubbles to be found in the cleaned fluid can be deposited on the thus perforated structure layer (76) and/or can be collected for delivery close to the fluid level.

2. The filter apparatus according to Claim 1, **characterised in that** the opening cross-sections for the passage points are chosen such that the volume of the gas bubbles can be increased for facilitated delivery due to the effect of their surface tension.

3. The filter apparatus according to Claim 1 or 2, **characterised in that** the passage points respectively have the same clear opening cross-section or that the clear opening cross-sections increase at least partially, preferably uniformly, in the direction of the rising fluid flow in the fluid flow space (66).

4. The filter apparatus according to any of the preceding claims, **characterised in that** the respective structure layer (76) is disposed in front of the housing wall (44) in the flow direction of the fluid through the passage openings (74) in said housing wall (44) and, preferably arranged in the fluid flow space (66), envelops with an edge-sided overlap the respectively assignable window-like passage openings (74).

5. The filter apparatus according to any of the preceding claims, **characterised in that** the passage points disposed within the housing wall (44) are arranged in groups the same distance apart from one another in the direction of the radial and/or axial extension.

6. The filter apparatus according to any of the preceding claims, **characterised in that** defined by the upper side of the housing wall (44) and by a lid part (54) of the apparatus, an inflow channel (16) for fouled fluid is formed or that the inflow channel (16) is formed by a penetration on the bottom side (46) of the housing wall (44) and the housing wall (44) connected to the lid part (54) forms a closed circumferential section.

7. The filter apparatus according to any of the preceding claims, **characterised in that** the housing wall (44) is configured so as to be closed towards its lower side (46) and that an additional sleeve (82) is inserted into the fluid flow space (66), said sleeve having additional passage points (80) below the lowest fluid level (68) to be assumed and forming up to that point and above this level (68) a closed sleeve surface.

## Revendications

1. Dispositif de filtration, prévu notamment pour être monté dans une cuve réservoir (10) de fluide, comprenant au moins un élément (18) filtrant, qui, de préférence, peut être remplacé, qui peut être traversé par un fluide de l'intérieur à l'extérieur et qui est entouré, respectivement en conservant une distance radiale pouvant être prescrite et avec formation d'un espace (66) d'écoulement de fluide, d'une paroi (44) d'enveloppe, qui a plusieurs points de passage, dont une partie est disposée en dessous du niveau (68) respectivement variable de fluide dans la cuve réservoir (10) et l'autre partie au-dessus de ce niveau (68) de fluide, **caractérisé en ce que** les points de passage respectifs font partie d'au moins une couche (76) de structure en tamis ou en grille, qui recouvre des ouvertures (74) de passage ménagées dans la paroi (44) de l'enveloppe et de préférence de type en fenêtre et **en ce que** les sections transversales libres d'ouverture des points de passage de la au moins une couche (76) de structure sont choisies de manière à ce que des bulles de gaz se trouvant éventuellement dans le fluide épuré puissent se déposer sur la couche (76) de structure ainsi perforée et/ou être recueillies pour une évacuation proche du niveau du fluide.

2. Dispositif de filtration suivant la revendication 1, **caractérisé en ce que** les sections transversales d'ouverture des points de passage sont choisies de manière à ce que les bulles de gaz puissent être agrandies en volume pour faciliter l'évacuation sous l'influence de leur tension superficielle.

3. Dispositif de filtration suivant la revendication 1 ou 2, **caractérisé en ce que** les points de passage ont entre eux respectivement une même section transversale libre d'ouverture ou **en ce que** les sections transversales libres d'ouverture augmentent en partie de préférence uniformément dans la direction du courant de fluide ascendant dans l'espace (66) pour le courant de fluide.

4. Dispositif de filtration suivant l'une des revendications précédentes, **caractérisé en ce que** les couches (76) de structure respective sont disposées, dans le sens de passage du fluide dans les ouvertures (74) de passage, dans la paroi (44) de l'enveloppe avant celles-ci et, en étant disposées de préférence dans l'espace (66) d'écoulement du fluide, entourent par un recouvrement du côté du bord les ouvertures (74) de passage de type en fenêtre, qui leur sont associées respectivement.

5. Dispositif de filtration suivant l'une des revendications précédentes, **caractérisé en ce que** les points de passage disposés à l'intérieur de la paroi (44) de l'enveloppe sont, en étant disposés en groupes, à une même distance les uns des autres dans la direction de l'étendue radiale et/ou axiale.

6. Dispositif de filtration suivant l'une des revendications précédentes, **caractérisé en ce qu'**il est formé, pour du fluide pollué, un canal (16) d'entrée délimité par le côté supérieur de la paroi (44) de l'enveloppe ainsi que par une partie (54) de couvercle du dispositif, ou **en ce que** le canal (16) d'entrée est formé par un passage du côté (46) de fond de la paroi (44) de l'enveloppe et la paroi (44) de l'enveloppe reliée à la partie (54) de couvercle forme une section périphérique fermée.

7. Dispositif de filtration suivant l'une des revendications précédentes, **caractérisé en ce que** la paroi (44) de l'enveloppe est fermée en direction de son côté (46) inférieur et **en ce que**, dans l'espace (66) d'écoulement du fluide, est inséré un manchon (82) supplémentaire, qui a d'autres points (80) de passage en dessous du niveau (68) de fluide le plus bas à considérer et forme jusque-là et au-dessus de ce niveau (68) une surface de manchon fermée.
